(19) **Europäisches Patentamt / European Patent Office / Office européen des brevets**

(11) **EP 2 657 728 A1**

(12) **DEMANDE DE BREVET EUROPEEN**

(43) Date de publication:
**30.10.2013 Bulletin 2013/44**

(51) Int Cl.:
**G01V 11/00** (2006.01)

(21) Numéro de dépôt: **13305331.4**

(22) Date de dépôt: **19.03.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **26.04.2012 FR 1201229**

(71) Demandeur: **IFP Energies nouvelles**
**92852 Rueil-Malmaison Cedex (FR)**

(72) Inventeur: **Euzen, Tristan**
**92500 RUEIL-MALMAISON (FR)**

(54) **Procédé de construction d'une diagraphie d'une propriété quantitative à partir de mesures sur échantillons et de mesures diagraphiques**

(57) - Procédé de construction d'une diagraphie d'une propriété quantitative représentative d'une formation poreuse, à partir de mesures sur échantillons et de mesures diagraphiques.

- On mesure une propriété quantitative (proportions minéralogiques) d'échantillons choisis parmi un ensemble d'échantillons, et l'on regroupe chacun de ces échantillons dans des classes homogènes relativement aux mesures diagraphiques. Puis, on détermine la valeur moyenne de la propriété quantitative dans chacune des classes. On construit alors une diagraphie représentant la probabilité d'attribuüon d'un échantillon à chacune des classes en fonction de la profondeur. Enfin, on construit la diagraphie représentant la propriété quantitative en fonction de la profondeur, à partir de la diagraphie représentant la probabilité d'attribution et des valeurs moyennes.

Fig. 1

**Description**

La présente invention concerne le domaine de l'exploitation de formations souterraines, tels que des gisements d'hydrocarbures. En particulier, l'invention concerne un procédé pour analyser des diagraphies dans le but d'évaluer, en fonction de la profondeur, des propriétés quantitatives représentatives des formations.

On appelle diagraphie (« well log » en anglais) une mesure réalisée, à l'aide de différentes sondes, des caractéristiques des roches traversées lors d'un forage. D'une manière générale, on appelle diagraphie tout enregistrement d'une caractéristique d'une formation géologique traversée par un sondage en fonction de la profondeur.

Les diagraphies doivent être interprétées pour fournir les informations nécessaires aux ingénieurs réservoirs, en charge de l'exploration ou de l'exploitation du milieu souterrain. Une fois interprétées, ces mesures diagraphiques fournissent des informations telles que : la résistivité, la densité, la porosité, la perméabilité des matériaux traversés.

On appelle aussi diagraphie les diagraphies issues de l'interprétation d'une ou plusieurs diagraphies. Certaines diagraphies donnent, après interprétation, des informations qualitatives, d'autres des informations quantitatives.

L'industrie pétrolière, et plus précisément l'exploration et l'exploitation de gisements, notamment pétroliers, nécessitent d'acquérir une connaissance aussi parfaite que possible de la géologie souterraine pour fournir de façon efficace une évaluation des réserves, une modélisation de la production, ou la gestion de l'exploitation. En effet, la détermination de l'emplacement d'un puits de production ou d'un puits d'injection, la constitution de la boue de forage, les caractéristiques de complétion, le choix d'un procédé de récupération des hydrocarbures (tel que l'injection d'eau par exemple) et des paramètres nécessaires à la mise en oeuvre de ce procédé (tels que la pression d'injection, le débit de production,...) nécessitent de bien connaître le gisement. Connaître le gisement signifie notamment connaître les propriétés pétrophysiques du sous-sol en tout point de l'espace.

Pour ce faire, depuis longtemps, l'industrie pétrolière allie les mesures sur champ (in situ) aux modélisations expérimentales (réalisées au laboratoire) et/ou numériques (réalisées au moyen de logiciels).

On connaît des méthodes d'analyse quantitative de logs conventionnelles. Traditionnellement, l'évaluation quantitative des logs vise à évaluer les volumes de fluides en place dans un réservoir et leur mobilité. Les trois principaux paramètres que l'on cherche à quantifier sont la porosité, la perméabilité et les saturations en fluides. Ces données sont ensuite utilisées pour estimer les volumes d'hydrocarbure en place, déterminer les techniques d'exploitation les mieux adaptées et prédire la productivité des puits et les taux de récupération pour les calculs économiques. Avec le développement récent des réservoirs non-conventionnels et leur exploitation par fracturations hydrauliques multiples le long de drains horizontaux, d'autres paramètres comme la teneur en matière organique ou les propriétés géomécaniques du réservoir deviennent prépondérant dans l'évaluation quantitative des logs.

Cependant, avec ces méthodes connues, il est difficile d'intégrer des données de diagraphies avec des mesures quantitatives sur carottes ou déblais de forage, car ces différents types d'information ont des fréquences d'échantillonnage et des résolutions spatiales variables. Il en résulte des relations complexes et non linéaires qui rendent délicate l'utilisation de modèles pétrophysiques basés sur une relation linéaire entre les proportions de minéraux et la signature diagraphique.

L'objet de l'invention concerne un procédé pour construire une diagraphie d'une propriété quantitative représentative d'une formation poreuse, bien adapté aux réservoirs complexes et permettant d'intégrer les données de carottes et de débris de forage (« cuttings »).

**Le procédé selon l'invention**

De façon générale, l'objet de l'invention concerne un procédé de construction d'une diagraphie d'une propriété quantitative représentative d'une formation poreuse traversée par au moins un forage, à partir d'un ensemble d'échantillons de ladite formation poreuse prélevés à des profondeurs pour lesquelles l'on dispose de mesures diagraphiques. Le procédé comporte les étapes suivantes :

   a) on mesure au moins une propriété quantitative d'échantillons choisis parmi ledit ensemble d'échantillons ;

   b) on regroupe chacun desdits échantillons choisis dans des classes homogènes relativement aux mesures diagraphiques, au moyen d'une analyse des mesures diagraphiques ;

   c) on détermine une valeur moyenne de ladite propriété quantitative dans chacune desdites classes ;

   d) on construit une diagraphie représentant une probabilité d'attribution d'un échantillon à chacune desdites classes en fonction de la profondeur dans ledit forage ;

   e) on construit ladite diagraphie représentant ladite propriété quantitative en fonction de la profondeur dans ledit forage, à partir de ladite diagraphie représentant une probabilité d'attribution et desdites valeurs moyennes.

Selon l'invention, on peut construire la diagraphie représentant la propriété quantitative au moyen de la formule suivante :

$$C_a^Z = \sum_i P^Z(f_i) C_a(f_i)$$

Avec :

- $C_a(f_i)$ : valeur moyenne de la propriété quantitative au sein de la classe fi ;

- $P^Z(f_i)$ : probabilité d'attribution à la classe $f_i$, fonction de la profondeur Z ;

- $C_a'^Z$ : propriété quantitative à la profondeur Z.

Selon l'invention, la propriété quantitative peut être choisie parmi les propriétés suivantes : proportion minéralogique d'échantillons, lithologie, densité de matrice et porosité. Les mesures diagraphiques peuvent être choisies parmi : gamma ray, porosité neutron, densité, sonic.

L'invention concerne également un procédé pour optimiser l'exploitation d'une formation souterraine traversée par au moins un forage, dans lequel :

- on construit une diagraphie représentant une proportion minéralogique en fonction de la profondeur, au moyen du procédé selon l'invention ;

- on utilise ladite diagraphie obtenue à l'étape précédente pour en déduire des paramètres liés à une qualité de la formation souterraine, telle que densité, porosité, fragilité ou teneur en matière organique ;

- on optimise l'exploitation de la formation souterraine en choisissant des intervalles les plus prospectifs et les mieux adaptés pour un type de complétion envisagé, en fonction desdits paramètres liés à la qualité de la formation souterraine.

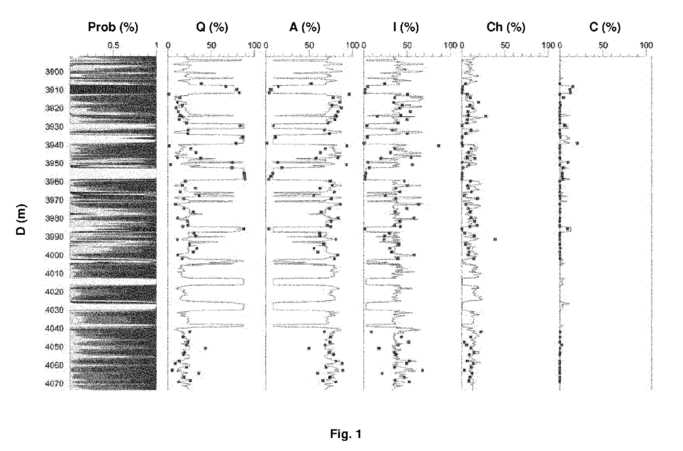

D'autres caractéristiques et avantages du procédé selon l'invention, apparaîtront à la lecture de la description ci-après d'exemples non limitatifs de réalisations, en se référant à la figure 1, qui montre des proportions minéralogiques obtenues par le procédé selon l'invention (en trait continue) comparées à des proportions minéralogiques mesurées sur carottes (points noirs)....

Description détaillée du procédé

Le procédé selon l'invention permet de construire une diagraphie d'une propriété quantitative représentative d'une formation poreuse traversée par au moins un forage. Il s'agit de fournir une information sur la proportion minéralogique des matériaux de la formation en fonction de la profondeur dans un forage.

Le procédé utilise des diagraphies conventionnelles (gamma ray, porosité neutron, densité, sonic,...) et un ensemble d'échantillons de la formation poreuse prélevés à des profondeurs pour lesquelles l'on dispose des diagraphies.

L'invention est décrite dans le cas de construction d'une diagraphie de proportion minéralogique. Le procédé comporte les étapes suivantes :

a) on mesure des proportions minéralogiques d'échantillons choisis parmi l'ensemble d'échantillons disponibles ;

b) on regroupe chacun de ces échantillons choisis dans des classes homogènes relativement aux diagraphies, au moyen d'une analyse des diagraphies ;

c) on détermine la proportion minéralogique moyenne de chacune des classes ;

d) on construit une première diagraphie représentant la probabilité d'attribution d'un échantillon à chacune des classes en fonction de la profondeur dans le forage ;

e) on construit une seconde diagraphie représentant la proportion minéralogique en fonction de la profondeur dans le forage, à partir de la première diagraphie et des proportions minéralogiques moyennes.

a) Mesure des proportions minéralogiques d'échantillons d'apprentissage

Les échantillons peuvent être des carottes ou des déblais de forage. Les échantillons d'apprentissage sont choisis parmi les échantillons disponibles. La mesure de proportions minéralogiques sur ce type d'échantillon est bien connue des spécialistes. Elles peuvent être réalisées par exemple à partir de technique de microscopie électronique à balayage et de spectroscopie X à dispersion d'énergie.

On détermine par exemple les proportions de quartz, dolomite, illite-smectite, chlorite...

b) Classification des échantillons dans des classes (electrofacies)

Les proportions minéralogiques mesurées sur les échantillons d'apprentissage sont utilisées pour définir des classes, notées $f_i$, représentatives de la gamme de variation totale observée dans les données. Une approche supervisée est ensuite utilisée pour définir des échantillons d'apprentissage caractéristiques de chaque classe.

Une telle méthode est décrite par exemple dans les brevets suivants : EP0.671.017 ; EP0.903.592 et EP1.189.167.

Le principe de cette méthode est le suivant :

- on identifie des portions de diagraphies (logs) caractéristiques de chaque classe définie au préalable sur la base des compositions minéralogiques.

- ces portions de diagraphies sont utilisées comme échantillons d'apprentissage pour définir les lois de distribution des diagraphies de chaque classe.

- ces lois de distribution sont ensuite utilisées pour calculer les diagraphies de probabilités d'attribution à chaque classe (analyse discriminante)

On peut par exemple utiliser le logiciel Easytrace® (IFP Energies nouvelles, France) pour réaliser cette étape.

Les classes sont donc définies et calibrées à partir de données minéralogiques quantitatives. Dans les méthodes traditionnelles, les classes sont généralement calibrées sur des facies géologiques définis à partir d'une interprétation qualitative (taille des grains, structures sédimentaires, bioturbations...). La composition minéralogique est directement reliée aux propriétés physiques de la roche et constitue une source d'information objective pour la calibration des classes (par opposition à une interprétation géologique).

<u>c) Détermination de proportion minéralogique moyenne de chaque classes ;</u>

Pour chacune de ces classes, et grâce aux mesures des proportions minéralogiques d'échantillons d'apprentissage, on peut calculer une proportion minéralogique moyenne de chaque classe $f_i$. Cette proportion moyenne de la classe $f_i$ est notée $C_a(f_i)$.

<u>d) Construction de diagraphie de probabilité d'attribution à une classe</u>

Pour chacune de ces classes (electrofacies), une diagraphie de probabilité est calculée. Il s'agit de définir la probabilité d'appartenance à chaque classe $f_i$ en fonction de la profondeur dans le forage. On note $P^Z(f_i)$ la probabilité d'attribution à la classe $f_i$ en fonction de la profondeur $Z$.

Pour ce faire, on peut utiliser la méthode suivante :

- La probabilité d'appartenance d'un échantillon à une classe est calculée par la formule de Bayes, qui prend en compte les caractéristiques diagraphiques de l'échantillon et les lois de probabilité intra-classe, déterminées sur l'échantillon d'apprentissage.

- Par exemple, dans le logiciel Easytrace®, on peut utiliser des lois de probabilité gaussiennes (linéaire ou quadratique) ou non paramétriques.

On peut par exemple utiliser le logiciel Easytrace® (IFP Energies nouvelles, France) pour réaliser cette étape.

<u>e) Construction de diagraphie de proportion minéralogique en fonction de la profondeur</u>

Enfin, ces logs de probabilité $P^Z(f_i)$ sont combinés avec les compositions minéralogiques moyennes $C_a(f_i)$ de chaque classe, pour calculer des diagraphies de proportion minéralogique en fonction de la profondeur, en utilisant la formule suivante :

$$C_a^Z = \sum_i P^Z(f_i) C_a(f_i)$$

Avec :

- $C_a(f_i)$ : proportion minéralogique moyenne de la classe fi ;

- $P^Z(f_i)$ : probabilité d'attribution à la classe $f_i$, fonction de la profondeur $Z$ ;

- $C_a^Z$ : proportion minéralogique à la profondeur Z.

Lorsque les échantillons sont des déblais de forage, les classes sont définies en regroupant les grains par lithotype, selon leur minéralogie et leur texture. Les échantillons d'apprentissage sont ensuite sélectionnés en identifiant la signature diagraphique des différents lithotypes dans l'intervalle d'échantillonnage.

Le procédé selon l'invention utilise donc les probabilités d'attribution de classes pour calculer une variable continue (des logs minéralogiques dans l'exemple présenté ici) plutôt que la classe elle-même (variable discrète). Dans l'approche conventionnelle, les probabilités sont utilisées pour mesurer la fiabilité de l'attribution aux classes. Selon l'invention, les probabilités élevées ne sont pas particulièrement recherchées et tendent à produire une faible variabilité. Le but poursuivi est au contraire de capturer les changements lithologiques graduels, reflétées dans des variations progressives et subtiles les logs.

L'invention a été décrite dans le cas de construction d'une diagraphie de proportion minéralogique. Mais on peut de la même façon construire toute diagraphie reflétant l'évolution d'une propriété quantitative représentative de la formation poreuse, en fonction de la profondeur, telle que : la lithologie, la densité de matrice et la porosité.

**Exemples**

La méthode a été testée sur les données d'un puits vertical du champ pétrolier. Les données utilisées comportent quatre diagraphies conventionnelles (gamma ray, porosité neutron, densité et sonic), et les compositions minéralogiques mesurées sur 67 échantillons de carotte.

Six classes ont été définies afin de prendre en compte les proportions variables de quartz, dolomite, illite-smectite et chlorite.

Vingt des 67 échantillons ont été utilisés comme échantillons d'apprentissage sur les logs diagraphiques (approche supervisée).

Des logs minéralogiques ont été calculés en utilisant la méthode décrite ci-dessus, puis comparés avec les compositions minéralogiques mesurées sur les carottes. Le calage aux données de carottes a ensuite été ajusté de manière itérative en modifiant la composition minéralogique moyenne des classes et la sélection des échantillons d'apprentissage. On compare la diagraphie minéralogique calculée aux valeurs mesurées. Si l'on considère le calage comme insuffisant, on ajuste la classification par deux moyens :

- Modifier le choix des portions de diagraphies utilisés comme échantillons d'apprentissage, ce qui modifie les lois de distribution intra-classe et les diagraphies de probabilités obtenus lors de la classification.

- Modifier la composition moyenne de certaines classes. On dispose d'un certain degré de liberté pour faire varier la composition moyenne théorique d'une classe afin d'ajuster la diagraphie minéralogique.

On ne recherche pas non plus un calage parfait aux données de carotte, car il faut garder à l'esprit que les diagraphies moyennent l'information avec une résolution spatiale inférieure à celle d'une mesure ponctuelle sur un échantillon de carotte.

La figure 1 montre des proportions minéralogiques obtenues par le procédé selon l'invention (en trait continue) comparées à des proportions minéralogiques mesurées sur carottes (points noirs). Sur la gauche de la figure, la diagraphie de probabilité (Prob) est représentée en fonction de la profondeur D. Puis de gauche à droite, sont représentées les proportions de quartz (Q), argile (A, « clay »), illite (I), Chlorite (Ch) et carbonates (C).

**Avantages**

Cette méthode présente un intérêt particulier pour intégrer les diagraphies conventionnelles avec des données quantitatives mesurées sur déblais de forage, pour les raisons suivantes :

- Les déblais de forage et les diagraphies conventionnelles sont des données disponibles et facilement accessibles dans la plupart des forages pétroliers (par oppositions aux carottes ou à des diagraphies plus spécialisées, plus rares et généralement plus couteuses). On appelle « diagraphies conventionnelles » des diagraphies qui sont généralement en routine dans presque tous les forages comme GR, SP, Densité, Neutron et Résistivités, ou qui sont relativement fréquentes comme le Sonic ou la PEF. A l'inverse les diagraphies non conventionnelles sont plus rares et plus couteuses : GR spectral, diagraphies géochimiques, RMN, etc.

- Les déblais de forage ont une faible fréquence d'échantillonnage (généralement 3 à 5 m) et chaque échantillon correspond à un mélange de grains qui moyenne l'information sur l'intervalle échantillonné. Il est donc nécessaire d'intégrer les données issues des déblais de forage aux diagraphies, afin d'en extraire une information à plus haute fréquence et de la propager le long du puits.

**Application**

Il est important de quantifier, par exemple, la minéralogie dans les réservoirs non-conventionnels. En effet, à partir de diagraphies de proportion minéralogique en fonction de la profondeur, le spécialiste peut notamment estimer les propriétés géomécaniques et la teneur en matière organique de ses réservoirs à partir des diagraphies.

Il en résulte une capacité à définir un schéma de production optimal pour la formation étudiée.

Ainsi, l'invention concerne également un procédé pour optimiser l'exploitation d'une formation souterraine traversée par au moins un forage, dans lequel :

- on construit une diagraphie représentant une proportion minéralogique en fonction de la profondeur, au moyen du procédé selon l'invention ;

- on utilise cette diagraphie pour en déduire des paramètres liés à la qualité de la formation souterraine (réservoir conventionnel ou non- conventionnel), comme la densité de la matrice, la porosité, la fragilité ou la teneur en matière organique par exemple ;

- on optimise l'exploitation de la formation souterraine en choisissant les intervalles les plus prospectifs et les mieux adaptés pour le type de complétion envisagé.

Par exemple, on peut construire une diagraphie minéralogique au moyen du procédé selon l'invention. Puis, à l'aide de cette diagraphie minéralogique, on peut calculer une digraphie de fragilité (« Brittleness Index »), afin de déterminer quels intervalles auront une meilleure réponse à la fracturation hydraulique et quels intervalles seront au contraire des barrières qui stopperont la propagation des fractures. Enfin, on peut optimiser l'exploitation de la formation souterraine, en plaçant un drain horizontal de manière optimale, afin de fracturer les intervalles les plus fragiles et/ou de contenir la fracturation dans la zones voulue, grâce aux barrières de fracturation identifiées sur les diagraphies.

## Revendications

1. Procédé de construction d'une diagraphie d'une propriété quantitative représentative d'une formation poreuse traversée par au moins un forage, à partir d'un ensemble d'échantillons de ladite formation poreuse prélevés à des profondeurs pour lesquelles l'on dispose de mesures diagraphiques, **caractérisé en ce que** l'on réalise les étapes suivantes :

     a) on mesure au moins une propriété quantitative d'échantillons choisis parmi ledit ensemble d'échantillons ;
     b) on regroupe chacun desdits échantillons choisis dans des classes homogènes relativement aux mesures diagraphiques, au moyen d'une analyse des mesures diagraphiques ;
     c) on détermine une valeur moyenne de ladite propriété quantitative dans chacune desdites classes ;
     d) on construit une diagraphie représentant une probabilité d'attribution d'un échantillon à chacune desdites classes en fonction de la profondeur dans ledit forage ;
     e) on construit ladite diagraphie représentant ladite propriété quantitative en fonction de la profondeur dans ledit forage, à partir de ladite diagraphie représentant une probabilité d'attribution et desdites valeurs moyennes.

2. Procédé selon la revendication 1, dans lequel on construit la diagraphie représentant ladite propriété quantitative au moyen de la formule suivante :

$$C_a^{'Z} = \sum_i P^Z(f_i).C_a(f_i)$$

Avec :

     - $C_a(f_i)$ : valeur moyenne de la propriété quantitative au sein de la classe fi ;
     - $P^Z(f_i)$ : probabilité d'attribution à la classe $f_i$, fonction de la profondeur Z ;

     - $C_a^{'Z}$ : propriété quantitative à la profondeur Z.

3. Procédé selon l'une des revendications suivantes, dans lequel la propriété quantitative est choisie parmi les propriétés suivantes : proportion minéralogique d'échantillons, lithologie, densité de matrice et porosité.

4. Procédé selon l'une des revendications suivantes, dans lequel les mesures diagraphiques sont choisies parmi : gamma ray, porosité neutron, densité, sonic.

5. Procédé pour optimiser l'exploitation d'une formation souterraine traversée par au moins un forage, dans lequel :

     - on construit une diagraphie représentant une proportion minéralogique en fonction de la profondeur, au moyen du procédé selon l'une des revendications précédentes ;
     - on utilise ladite diagraphie obtenue à l'étape précédente pour en déduire des paramètres liés à une qualité de la formation souterraine, telle que densité, porosité, fragilité ou teneur en matière organique ;
     - on optimise l'exploitation de la formation souterraine en choisissant des intervalles les plus prospectifs et les mieux adaptés pour un type de complétion envisagé, en fonction desdits paramètres liés à la qualité de la formation souterraine.

Fig. 1

Europäisches
Patentamt

European
Patent Office

Office européen
des brevets

**RAPPORT DE RECHERCHE EUROPEENNE**

Numéro de la demande

EP 13 30 5331

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 189 167 A1 (INST FRANCAIS DU PETROLE [FR]) 20 mars 2002 (2002-03-20) * abrégé; revendications 1-5; figures 1-4 * * alinéas [0002], [0003], [0012], [0043] - [0048] * ----- | 1-5 | INV. G01V11/00 |

DOMAINES TECHNIQUES
RECHERCHES (IPC)

G01V
E21B

Le présent rapport a été établi pour toutes les revendications

| Lieu de la recherche | Date d'achèvement de la recherche | Examinateur |
|---|---|---|
| La Haye | 9 juillet 2013 | Fernandes, Paulo |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   ...................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 30 5331

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-07-2013

| Document brevet cité au rapport de recherche | Date de publication | Membre(s) de la famille de brevet(s) | Date de publication |
|---|---|---|---|
| EP 1189167 A1 | 20-03-2002 | CA 2357117 A1 | 11-03-2002 |
| | | DK 1189167 T3 | 04-05-2009 |
| | | EP 1189167 A1 | 20-03-2002 |
| | | FR 2813959 A1 | 15-03-2002 |
| | | NO 20014390 A | 12-03-2002 |
| | | US 2002052690 A1 | 02-05-2002 |

EPO FORM P0460

Pour tout renseignement concernant cette annexe : voir Journal Officiel de l'Office européen des brevets, No.12/82

**EP 2 657 728 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0671017 A
- EP 0903592 A
- EP 1189167 A